# EUROPEAN PATENT APPLICATION

(11) **EP 3 379 791 A1**
(43) Date of publication of application: **26.09.2018**
(21) Application number: 17186978.7
(22) Date of filing: 18.08.2017
(51) Int. Cl.: H04L 29/06

(54) **METHOD AND A SYSTEM FOR FACILITATING NETWORK SECURITY**

(30) Priority: 20.03.2017 IN 201741009670
(71) Applicant: Wipro Limited, 560 035 Karnataka (IN)
(72) Inventor: GOVARDHAN, Sridhar, 560008 Karnataka (IN); VARKEY, Sunil, 689542 Kerala (IN)
(74) Representative: Finnegan Europe LLP

(57) **Abstract**

The method and system of present disclosure relate to facilitating network security. The method includes configuring a network comprising a plurality of devices which are provided with sensors for detecting security threats. Further, a security grid of the network is generated, in which, the sensors of one device may interact with sensors of other devices. The system may continuously monitor the activities of the devices and learn from them. Based on the monitoring and learning, a behavior pattern is generated. Further, the system captures a current activity of the device and compares it with the behavior pattern to determine the deviation. The system may consider the other factors like the context of the operating environment and occurrences of the same activity in other devices in the security grid to determine the genuineness of the deviation. If the device is determined to be anomalous, the system generates curative actions for addressing the abnormality of the device.

## Description

### Technical Field

The present subject matter is related, in general to network security and more particularly, but not exclusively to a method and a system for facilitating network security.

### Background

In today's enterprise environment, use of computing devices has become a common practice. With the increase in operations of the enterprises, the number of the computing devices has also increased. This leads to complexity in managing the computing devices as a substantial amount of sensitive information is generated. The sensitive information is prone to cyber-attacks, and hence providing network security to the computing devices has become a challenge in the enterprise environment.

Nowadays, the cyber-attacks have become more advanced and have increased the threat and losses in the enterprises. To address the security issues, several security products are deployed. However, due to the changing landscape of the enterprise environment it becomes a challenge for these traditional security products to address the security issues. Another challenge being faced is due to rapid adoption of cloud based technologies in the existing enterprise environment.

### Summary

Disclosed herein is a method of facilitating network security. The method includes configuring a network comprising a plurality of devices associated with the security system. Further, each of the plurality of devices is provided with one or more sensors for detecting one or more security threats or anomalies in behavior of the plurality of devices. The method further includes generating a security grid for the network using the plurality of devices such that the one or more sensors of one device of the plurality of devices are peered with the one or more sensors of one or more other devices. Further, the method includes building a behavior pattern corresponding to each of the plurality of devices. The behavior pattern is built by continuously monitoring and learning from one or more security related events being captured by the one or more sensors of the plurality of devices. Further, the method includes capturing an activity performed by at least one device of the plurality of devices. The method further includes identifying a context of an operating environment of the network when the activity is performed. The operating environment comprises one or more operating parameters of the network. The method further includes determining a deviation of the at least one device by comparing the activity with the behavior pattern associated with the at least one device. Further, the method includes determining a level of the deviation based on the context of the operating environment. The method further includes determining occurrences of the activity performed by the other devices, apart from the at least one device, of the plurality of devices. Further, the method includes tagging the at least one device as an anomalous device or a non-anomalous device based on the level of deviation and the occurrences of the activity.

Further, the present disclosure relates to security system for facilitating network security. The system comprises a processor and a memory communicatively coupled to the processor. The memory stores processor-executable instructions, which, on execution, cause the processor to configure a network comprising a plurality of devices associated with the security system. Further, each of the plurality of devices is provided with one or more sensors for detecting one or more security threats or anomalies in behavior of the plurality of devices. The processor further generates a security grid for the network using the plurality of devices such that the one or more sensors of one device of the plurality of devices are peered with the one or more sensors of one or more other devices. Further, the processor builds a behavior pattern corresponding to each of the plurality of devices. The behavior pattern is built by continuously monitoring and learning from one or more security related events being captured by the one or more sensors of the plurality of devices. The processor further captures an activity performed by at least one device of the plurality of devices. Further, the processor identifies a context of an operating environment of the network when the activity is performed. The operating environment comprises one or more operating parameters of the network. The processor further determines a deviation of the at least one device by comparing the activity with the behavior pattern associated with the at least one device. Further, the processor determines a level of the deviation based on the context of the operating environment. The processor further determines occurrences of the activity performed by the other devices, apart from the at least one device, of the plurality of devices. Further, the processor tags the at least one device as an anomalous device or a non-anomalous device based on the level of deviation and the occurrences of the activity.

Furthermore, the present disclosure relates to a non-transitory computer readable medium including instructions stored thereon that when processed by at least one processor cause a security system to perform the acts of configuring a network comprising a plurality of devices associated with the security system. Further, each of the plurality of devices is provided with one or more sensors for detecting one or more security threats or anomalies in behavior of the plurality of devices. The security system further generates a security grid for the network using the plurality of devices such that the one or more sensors of one device of the plurality of devices are peered with the one or more sensors of one or more other devices. Further, the security system builds a behavior pattern corresponding to each of the plurality of devices. The behavior pattern is built by continuously monitoring and learning from one or more security related events being captured by the one or more sensors of the plurality of devices. The security system further captures an activity performed by at least one device of the plurality of devices. Further, the security system identifies a context of an operating environment of the network when the activity is performed. The operating environment comprises one or more operating parameters of the network. The security system further determines a deviation of the at least one device by comparing the activity with the behavior pattern associated with the at least one device. Further, the security system determines a level of the deviation based on the context of the operating environment. The security system further determines occurrences of the activity performed by the other devices, apart from the at least one device, of the plurality of devices. Further, the security system tags the at least one device as an anomalous device or a non-anomalous device based on the level of deviation and the occurrences of the activity.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief description of the accompanying drawings

The accompanying drawings, which are incorporated in and constitute a part of this disclosure, illustrate exemplary embodiments and, together with the description, explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and regarding the accompanying figures, in which:
**FIG. 1** shows an exemplary environment for facilitating network security in accordance with some embodiments of the present disclosure;
**FIG. 2** shows a detailed block diagram illustrating a security system for facilitating network security in accordance with some embodiments of the present disclosure;
**FIG. 3** shows a flowchart illustrating a method for facilitating network security in accordance with some embodiments of the present disclosure; and
**FIG. 4** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the specific forms disclosed, but on the contrary, the disclosure is to cover all modifications, equivalents, and alternative falling within the scope of the disclosure.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and a security system for facilitating network security. The network security may be provided in any enterprise or to a network like internet of things (IOT) or Supervisory control and data acquisition (SCADA) network. Although, the method for facilitating the network security is described in conjunction with a server, the said method can also be implemented in various computing systems/devices, other than the server. In the enterprise like companies, firms, organizations and the like or in any network, a lot of computing devices like computers, laptops, desktops, smartphones and other computing devices are deployed. These computing devices may be located at same location or may be remotely located.

The computing devices, connected in a home network of the enterprise, interact with each other, and various sensitive information is transmitted and received. However, many times, the computing devices are accessed outside the home network either due to requirement of project or due to wish of a user. In any of these scenarios, there may be a high risk of cyber-attacks or network threat on the computing devices. Even within the home network, the computing devices are prone to the security attacks. These attacks may be disastrous as they not only lead to data/information loss, but may also result in financial losses for the enterprise.

To prevent the computing devices (i.e., user-devices or network devices) from such possible attacks, the present disclosure focusses on different perspectives. For example, from the device perspective, the present disclosure discloses a monitoring and learning technique in which the security system learns from the activities of the devices. This helps in understanding the behavior of the devices. On the other hand, from the network perspective, the present disclosure identifies context of an operating environment of the network. The operating environment includes the operating parameters like a geography or location of devices, a type of network, a type of applications, and a type of operating system running on the devices. Consideration of both perspectives provides an overall view of the environment and makes the network robust and secure.

In the following detailed description of the embodiments of the disclosure, reference is made to the accompanying drawings that form a part hereof, and which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

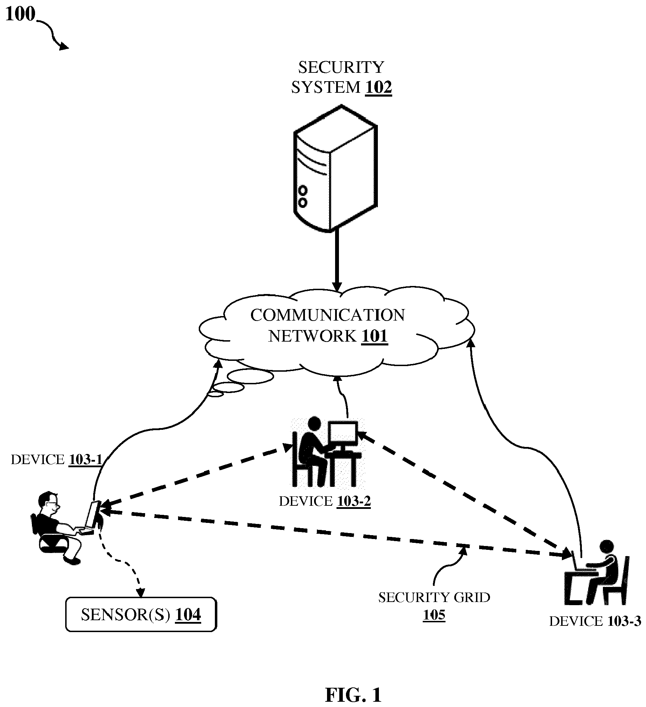

**FIG. 1** shows an exemplary environment for facilitating network security in accordance with some embodiments of the present disclosure.

The environment **100** includes a communication network **101,** a security system **102,** device **103-1,** device **103-2** and device **103-3.** The device **103-1,** device **103-2** and device **103-3** may be collectively and individually referred to as devices **103,** are provided with one or more sensors **104.** The one or more sensors **104** may include an anti-malware sensor, an anti-phishing sensor, an anti-bot sensor, an anti-data theft sensor, and an anti-ransomware sensor. The devices **103** may be located at the same location or may be remotely located. Further, a security grid **105** (shown as dotted lines) is generated for the network such that the sensors from one device **103** are connected with the sensor(s) of another device **103.** According to embodiments of present disclosure, the security grid **105** generated may indicate different groups. For example, the security grid **105** may be a financial grid i.e., a grid indicating a group of devices **103** employed for financial activities. Similarly, other security grids **105** like mobile grid or administrator grid or any other grid may be generated based on the types of activities in which the devices **103** are involved. In FIG. 1, only one security grid **105** is shown for ease of understanding. However, any number of security grids **105** may be generated depending upon the size of the network.

In an embodiment, the security system **102** may monitor the activities of the devices **103** and security related events captured by the sensors **104.** Based on the monitoring, the security system **102** learns about the behaviors of the devices **103** and may build a behavior pattern. This helps the security system **102** to differentiate between normal and abnormal activities performed by the devices **103.** However, the security system **102** of the present disclosure not only relies on the behavior pattern, but may also consider the various factors affecting the activities of the devices. One of the factors may be the operating environment of the network in which the devices **103** are deployed. Thus, based on the above, the security system **102** may identify abnormality in the devices **103** if any deviation is detected from the normal behavior.

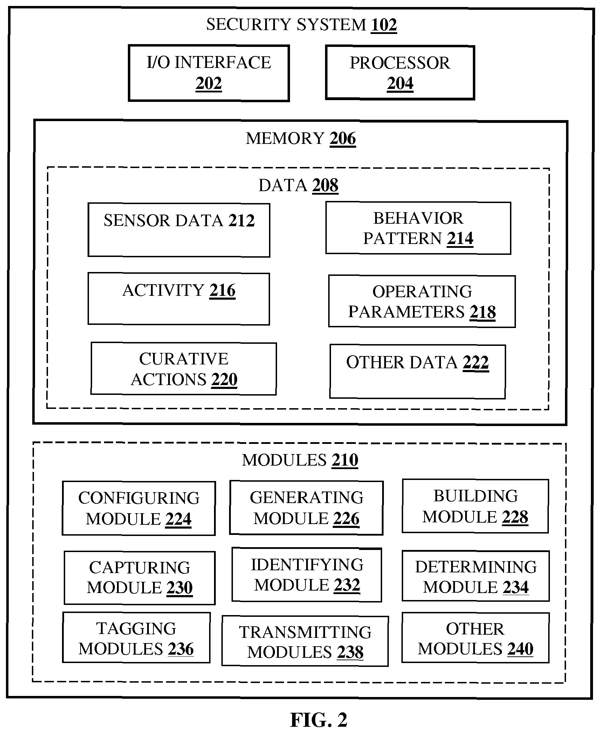

**FIG. 2** shows a detailed block diagram illustrating a security system **102** for facilitating network security in accordance with some embodiments of the present disclosure.

The security system **102** includes an I/O interface **202,** a processor **204,** and a memory **206.** The I/O interface **202** may be configured to receive sensor data **212** captured by one or more sensors **104** provided in the devices **103.** The memory **206** may be communicatively coupled to the processor **202.** The processor **202** may be configured to perform one or more functions of the security system **102** for facilitating network security. In one implementation, the security system **102** may include data **208** and modules **210** for performing various operations in accordance with the embodiments of the present disclosure. In an embodiment, the data **208** may be stored within the memory **206** and may include, without limiting to, sensor data **212,** behavior pattern **214,** activity **216,** operating parameters **218,** curative actions **220,** and other data **222.**

In some embodiments, the data **208** may be stored within the memory **206** in the form of various data structures. Additionally, the data **208** may be organized using data models, such as relational or hierarchical data models. The other data **222** may store data, including temporary data and temporary files, generated by the modules **210** for performing the various functions of the security system **102.**

In an embodiment, the sensor data **212** may include data captured by the one or more sensors **104** provided in the devices **103.** Since the devices **103** may be involved in different activities, various security related events occurred while performing the activities may be captured by the sensors **104** as a sensor data **212** and transmitted to the security device **102.**

In an embodiment, the behavior pattern **214** may be generated based on continuous monitoring and learning from the security related events captured by the sensors **104.** The behavior pattern indicates the nature of activities performed by the devices **103.** This helps the security system **102** detect any abnormal behavior of the devices **103** due to any possible network security attacks.

In an embodiment, the activity **216** may be one or more operations performed by the devices **103.** The activity **216** is captured by the security system **102** and further utilized for determining any deviation from the normal behavior.

In an embodiment, the operating environment includes the operating parameters **218** of the network in which the devices **103** are deployed. The operating parameters **218** may include geography or location associated with the devices, type of network, and type of applications and type of operating system running on the devices **103.**

In an embodiment, the curative actions **220** may be a remediation package which includes different actions for addressing any abnormality detected in the devices **103.** The curative actions **220** may include creating new policy, modifying an existing policy, deleting files, deleting processes, deleting registries, updating software modules installed in the devices **103** and the like.

In some embodiments, the data **208** may be processed by one or more modules **210** of the security system **102.** In one implementation, the one or more modules **210** may be stored as a part of the processor **204.** In another implementation, the one or more modules **210** may be communicatively coupled to the processor **204** for performing one or more functions of the security system **102.** The modules **210** may include, without limiting to, a configuring module **224,** a generating module **226,** a building module **228,** a capturing module **230,** an identifying module **232,** a determining module **234,** a tagging module **236,** a transmitting module **238,** and other modules **240.**

As used herein, the term 'module' refers to an application specific integrated circuit (ASIC), an electronic circuit, a processor (shared, dedicated, or group) and memory that execute one or more software or firmware programs, a combinational logic circuit, and/or other suitable components that provide the described functionality. In an embodiment, the other modules **240** may be used to perform various miscellaneous functionalities of the security system **102.** It will be appreciated that such modules **210** may be represented as a single module or a combination of different modules.

In an embodiment, the configuring module **224** may configure a network comprising a plurality of devices **103** associated with the security system **102.** Each of the plurality of devices **103** is provided with one or more sensors **104.** The sensors **104** may detect one or more security threats or anomalies in behavior of the plurality of devices **103.** Further, the sensors **104** may include, but not limited to, an anti-malware sensor, anti-phishing sensor, anti-bot sensor, anti-data theft sensor, and anti-ransomware sensor.

Once the network is configured, the generating module **226** may generate a security grid **105** for the network by using the plurality of devices **103.** The security grid **105** is generated such that the sensors **104** of one device **103,** of the plurality of devices **103,** is peered with the one or more sensors **104** of other devices **103.** The generation of the security grid **105** may allow the devices to interact with each other for sharing any relevant information. The security grid **105** may also help the security system **102** to quickly enquire amongst the devices **103** if any malicious activity is detected in any one device **103.**

Based on the security grid **105** generated, the security system **102** continuously monitors the activities of the devices **103.** The devices **103** may start interacting with each other. During the interaction, the devices **103** may go through various security related events associated with network environment, processes, services, registry, and hardware interrupts. All the events may be captured by the sensors **104** provided in the devices **103.** For example, the device **103** may receive an email from an unknown sender. In this case, the anti-phishing sensor of the device **103** may monitor the email closely and may capture the event of receiving an email from an unknown sender. In another event, the user may read that email and may click on a link (URL) mentioned in the email. This may further lead to other security related events like downloading of an office document, opening and executing a script, and connecting to a malicious website. In this case, the anti-bot sensor of the device **103** may capture such events and may stop the service and inform the abnormality to the security system **102.** All the data captured by the sensors **104** may be referred as sensor data **212.** According to embodiments, the sensor data **212** may be captured and transmitted to the security system **102** for analysis. The security system **102** may create a log of the sensor data **212** and may analyze it from time to time.

The aforementioned events are not only continuously captured and monitored by the security system **102,** but also allow the security system **102** to learn (i.e., self-learning) from such continuous monitoring. Based on the continuous monitoring and learning, the building module **228** of the security system **102** may build a behavior pattern **214** corresponding to each device **103** of the plurality of devices **103.** The building of the behavior pattern **214** may help the security system **102** understand about the routine activities being performed by each of the plurality of devices **103.**

Once the behavior pattern **214** is built, the capturing module **230** of the security system **102** may capture an activity performed by the plurality of devices **102.** The activity may indicate the current activity being performed by the device **102.** For example, the activities may include a login activity, email reading, opening of an attachment, browsing internet, visiting a website, downloading software, and installing software on the device **103.** It would be understood by a person skilled in art that the capturing module **230** may also capture any activity performed by the device **103.** The captured activities are used for determining any deviation or abnormality in the behavior of the devices **103.**

However, the security system **102** is not only dependent upon the current activities captured for determining the deviation, but also considers the operating environment of the network. For example, the identifying module **232** of the security system **102** may identify a context of the operating environment of the network once the activity is performed and captured. The operating environment includes one or more operating parameters **218** of the network. For example, the operating parameters **218** may include geography or current location of the devices **103,** a type of network, a type of applications, and/or type of operating systems running on the devices **103.** The consideration of the operating environment makes the security system **102** mature and robust while determining the abnormality in the devices **103.**

In next step, the determining module **234** of the security system **102** may determine the deviation of any device **103** by comparing its activity with the behavior pattern associated with that device **103.** This provides clarity to the security system **102** that whether the device **103** has been deviating from its normal behavior as per the behavior pattern **214** built for that device **103.** Even if it is determined that device **102** has been deviating from its normal behavior, the security system **102** does not finalize the abnormality of the device **103** at this stage. This is because there may be other perspectives or valid reasons due to which such a deviation is detected in the normal behavior.

To check with the valid reasons, the determining module **234** of security system **102** may now determine a level of the deviation based on the context of the operating environment. As discussed above, there may be different operating parameters **218** in which the devices **103** may operate. Post determining the level of deviation, the determining module **234** may now determine the occurrences of the activity in other devices **103** in the network. The operating parameters **218** and occurrences are considered to determine the genuineness of the deviation of the device **103.** For example, if the deviation is determined due to a change in the location and the operating system of the device **103,** and such a change is genuine or, in other words, is required as per the project requirement, the device **103** may not be determined as the abnormal device.

However, if the deviation is determined to be not genuine, the tagging module **236** may tag the device **103** as an anomalous device. For example, if the device **103** in the entire security grid **105** is the only device which has changed its operating system or changed its location without any valid requirement, such device **103** is tagged as the anomalous device. Further, it may also happen that the anomalous device may affect other devices in the security grid **105.** Thus, once the device **103** or any other devices **103** is determined to be anomalous, the one or more curative actions **220** are required to be taken.

According to an embodiment, the generating module **226** of the security system **102** may generate one or more curative actions **220** for the device **103** and the other devices **103** in order to address the anomaly detected in the behavior of that device **103** and the other devices **103** due to the deviation. The curative actions **220** may include creating new policies, modifying existing policies, deleting files present in the devices, deleting processes, deleting registries, updating software modules installed in the devices **103** and/or the like. Once the curative actions **220** are generated, the transmitting module **238** of the security system **102** may transmit the curative actions **220** to the device **103** and the other devices **103** determined to be anomalous. This way the security device **102** facilitates the network security to devices **103** connected in the network.

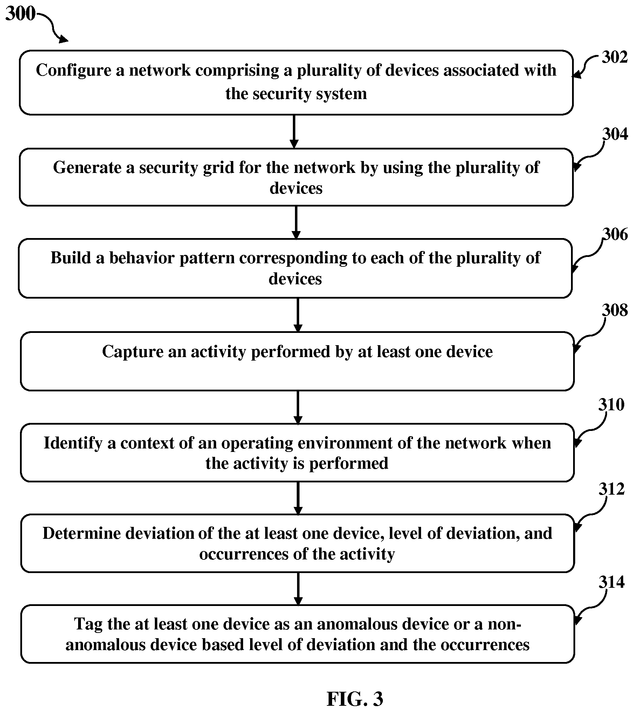

**FIG. 3** shows a flowchart illustrating a method for facilitating network security in an enterprise in accordance with some embodiments of the present disclosure.

As illustrated in **FIG. 3****,** the method **300** includes one or more blocks illustrating a method of facilitating network security using security system **102.** The method **300** may be described in the general context of computer executable instructions. Generally, computer executable instructions can include routines, programs, objects, components, data structures, procedures, modules, and functions, which perform specific functions or implement specific abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **302,** the method **300** includes configuring, by a security system **102,** a network comprising a plurality of devices **103** associated with the security system **102.** Further, each of the plurality of devices **103** is provided with one or more sensors **104** for detecting one or more security threats or anomalies in behavior of the plurality of devices. According to an embodiment, the one or more sensors **104** may include at least one of an anti-malware sensor, an anti-phishing sensor, an anti-bot sensor, an anti-data theft sensor, and an anti-ransomware sensor.

At block **304,** the method **300** includes generating, by the security system **102,** a security grid **105** for the network using the plurality of devices **103** such that the one or more sensors **104** of one device **103** of the plurality of devices **103** are peered with the one or more sensors **104** of other devices **103.**

At block **306,** the method **300** includes building, by the security system **102,** a behavior pattern corresponding to each of the plurality of devices **103.** The behavior pattern is built by continuously monitoring and learning from one or more security related events being captured by the one or more sensors **104.** In an embodiment, the one or more security related events may be associated with at least one of a network environment, processes, services, a registry, and hardware interrupts. For example, the device **103** may receive an email from an unknown sender (i.e., from a sender not in a sender list). In this example, the anti-phishing sensor may monitor the email closely. In another example, the user may read the email and may click on a link mentioned in the email. Further, the other security related events may include downloading of an office document, opening and executing a script, connecting to a malicious website. According to an embodiment, the anti-bot sensor may stop the service and inform the abnormality to the security system **102.**

At block **308,** the method **300** includes capturing, by the security system **102,** an activity performed by at least one device of the plurality of devices **103.** In an embodiment, the activity may include at least one of a login activity, email reading, opening of an attachment, browsing internet, visiting a website, downloading software, and installing software.

At block **310,** the method **300** includes identifying, by the security system **102,** a context of an operating environment of the network when the activity is performed. The operating environment may include one or more operating parameters **218** of the network. Further, the one or more operating parameters **218** include geography associated with the plurality of devices **103,** a type of network, a type of applications, and/or a type of operating system running on the plurality of devices **103.**

At block **312,** the method **300** includes determining, by the security system **102,** a deviation of the at least one device **103** by comparing the activity with the behavior pattern associated with the at least one device **103,** a level of the deviation based on the context of the operating environment, and occurrences of the activity performed by the other devices **103,** apart from the at least one device **103,** of the plurality of devices **103.**

At block **314,** the method **300** includes tagging, by the security system **102,** the at least one device **103** as an anomalous device or a non-anomalous device based on the level of deviation and the occurrences of the activity.

### Computer System

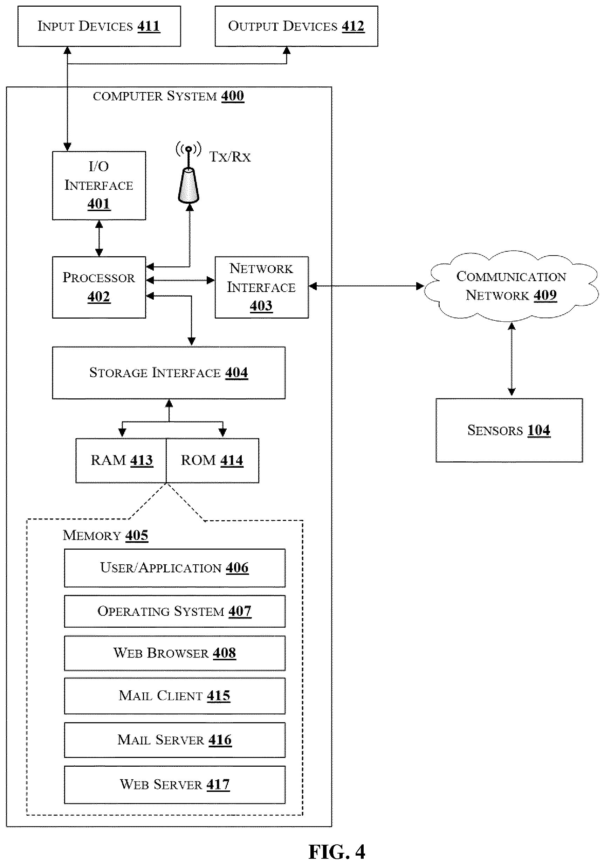

**FIG. 4** illustrates a block diagram of an exemplary computer system **400** for implementing embodiments consistent with the present disclosure. In an embodiment, the computer system **400** may be the security system **102** which is used for facilitating network security. The computer system **400** may include a central processing unit ("CPU" or "processor") **402.** The processor **402** may comprise at least one data processor for executing program components for executing user- or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices (**411** and **412**) via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), HighSpeed Packet Access (HSPA+), Global System For Mobile Communications (GSM), Long-Term Evolution (LTE) or the like), etc.

Using the I/O interface **401,** the computer system **400** may communicate with one or more I/O devices (**411** and **412**). In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **403** and the communication network **409,** the computer system **400** may communicate with the plurality of devices **103.** The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc.

In some embodiments, the processor **402** may be disposed in communication with a memory **405** (e.g., RAM **413,** ROM **414,** etc. as shown in **FIG. 4**) via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magnetooptical drive, optical drive, Redundant Array of Independent Discs (RAID), solid-state memory devices, solid-state drives, etc.

The memory **405** may store a collection of program or database components, including, without limitation, user/application **406,** an operating system **407,** web browser **408,** etc. In some embodiments, computer system **400** may store user/application data **406,** such as the data, variables, records, etc. as described in this disclosure. Such databases may be implemented as fault-tolerant, relational, scalable, secure databases such as Oracle or Sybase.

The operating system **407** may facilitate resource management and operation of the computer system **400.** Examples of operating systems include, without limitation, Apple Macintosh OS X, UNIX, Unix-like system distributions (e.g., Berkeley Software Distribution (BSD), FreeBSD, Net BSD, Open BSD, etc.), Linux distributions (e.g., Red Hat, Ubuntu, K-Ubuntu, etc.), International Business Machines (IBM) OS/2, Microsoft Windows (XP, Vista/7/8, etc.), Apple iOS, Google Android, Blackberry Operating System (OS), or the like. A user interface may facilitate display, execution, interaction, manipulation, or operation of program components through textual or graphical facilities. For example, user interfaces may provide computer interaction interface elements on a display system operatively connected to the computer system **400,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system **400** may implement a web browser **408.** The web browser **408** may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **400** may implement a mail server stored program component. The mail server **416** may be an Internet mail server such as Microsoft Exchange, or the like. The mail server **416** may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **400** may implement a mail client **415.** The mail client **415** may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

### Advantages of the embodiment of the present disclosure are illustrated herein.

In an embodiment, the present disclosure provides a method for facilitating network security by considering different perspectives associated with the network, thereby making the method robust.

In an embodiment, the method of the present disclosure provides a minimal human interaction while facilitating the network security.

In an embodiment, the method of the present disclosure provides self-learning from the activities of the devices monitored in the network.

In an embodiment, the method of the present disclosure helps in reducing the management overheads by providing end-to-end management of the security threats.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of facilitating network security, the method comprising:
configuring, by a security system, a network comprising a plurality of devices associated with the security system, wherein each of the plurality of devices is provided with one or more sensors for detecting one or more security threats or anomalies in behavior of the plurality of devices;
generating, by the security system, a security grid for the network using the plurality of devices such that the one or more sensors of one device of the plurality of devices are peered with the one or more sensors of one or more other devices;
building, by the security system, a behavior pattern corresponding to each of the plurality of devices, wherein the behavior pattern is built by continuously monitoring and learning from one or more security related events being captured by the one or more sensors of the plurality of devices;
capturing, by the security system, an activity performed by at least one device of the plurality of devices;
identifying, by the security system, a context of an operating environment of the network when the activity is performed, wherein the operating environment comprises one or more operating parameters of the network;
determining, by the security system,
a deviation of the at least one device by comparing the activity with the behavior pattern associated with the at least one device,
a level of the deviation based on the context of the operating environment, and
occurrences of the activity performed by the other devices, apart from the at least one device, of the plurality of devices; and
tagging, by the security system, the at least one device as an anomalous device or a non-anomalous device based on the level of deviation and the occurrences of the activity.

2. The method as claimed in claim 1, wherein the activity includes at least one of a login activity, email reading, opening of an attachment, browsing internet, visiting a website, downloading software, and installing software.

3. The method as claimed in claim 1 or claim 2, wherein the one or more sensors of the plurality of devices include at least one of an anti-malware sensor, an anti-phishing sensor, an anti-bot sensor, an anti-data theft sensor, and an anti-ransomware sensor.

4. The method as claimed in any of the preceding claims, wherein the one or more security related events are associated with at least one of a network environment, processes, services, a registry, and hardware interrupts.

5. The method as claimed in any of the preceding claims, wherein the one or more operating parameters includes geography associated with the plurality of devices, a type of network, a type of applications, and/or a type of operating system running on the plurality of devices.

6. The method as claimed in any of the preceding claims, further comprising generating one or more curative actions for the at least one device and the other devices when the least one device is determined as the anomalous device, wherein the one or more curative actions are generated to address the anomaly in behavior of the at least one device and the other devices due to the deviation.

7. The method as claimed in claim 6, further comprising transmitting the one or more curative actions to the at least one device and the other devices.

8. A security system for facilitating network security, the system comprising: a processor; and
a memory communicatively coupled to the processor, wherein the memory stores processor-executable instructions, which, on execution, cause the processor to perform the method as claimed in any of the preceding claims

9. A non-transitory computer-readable storage medium including instructions stored thereon that when processed by at least one processor cause a security system to perform the method as claimed in any of claims 1 to 7.
